# EUROPEAN PATENT APPLICATION

(11) **EP 4 832 171 A1**
(43) Date of publication of application: **28.10.2026**
(21) Application number: 24907980.7
(22) Date of filing: 16.12.2024
(51) Int. Cl.: H01M 10/655, H01M 50/242, H01M 10/613, C08L 83/04, C08K 3/04, C08G 77/20, C08G 77/12, C08G 77/26, C08K 3/22

(54) **GAP FILLER COMPOSITION AND BATTERY PACK**

(30) Priority: 22.12.2023 KR 20230190141
(71) Applicant: Dongwoo Fine-Chem Co., Ltd., Iksan-si, Jeonbuk-do 54631 (KR)
(72) Inventor: SIM, Min Kyu, Iksan-si, Jeonbuk-do 54631 (KR); KIM, Hyun Woo, Iksan-si, Jeonbuk-do 54631 (KR); SHIN, Woo Jun, Iksan-si, Jeonbuk-do 54631 (KR)
(74) Representative: dompatent
(86) International application number: PCT/KR2024/020409
(87) International publication number: WO 2025/135697

(57) **Abstract**

A gap filler composition according to embodiments of the present invention comprises a siloxane-based resin, a filler containing thermally conductive inorganic particles and graphite particles, a catalyst, and an amino-silicone-based dispersant. The content of the thermally conductive inorganic particles is 65-95 wt % relative to the total weight of the composition. The content of the graphite particles is 1-20 wt% relative to the total weight of the composition. Provided is a gap filler composition that, by utilizing the amino-silicon-based dispersant and the graphite particles, maintains low specific gravity and possesses enhanced thermal conductivity and viscosity stability A battery pack utilizing the gap filler composition is provided.

## Description

### [TECHNICAL FIELD]

The present invention relates to a gap filler composition and a battery pack. More particularly, the present invention relates to a gap filler composition including a siloxane-based resin and a battery pack including a gap filler formed using the same.

### [BACKGROUND ART]

A secondary battery is a battery capable of being repeatedly charged and discharged, and is widely used as a power source for portable electronic devices such as a mobile phones a laptop PC, or the like. For example, a lithium secondary battery has high operating voltage, energy density and rate properties, and has recently been used as a power source for an electric vehicle.

For example, a battery cell is defined by a lithium secondary battery, and a plurality of the battery cells are gathered to form a battery module. The battery modules may be gathered to form a high-capacity/high-power battery pack applicable to an electric vehicle.

To apply the battery pack to a vehicle such as an electric vehicle, the battery pack may be seated on a battery support plate, and the battery pack may be fixed using a gap filler composition.

The process of applying the gap filler composition may be included in an entire production platform of the electric vehicle. Thus, in order to maintain automobile process efficiency/reliability, a gap filler composition capable of being cured within a predetermined time to provide desired physical properties may be needed.

A design of a composition having improved thermal conductivity for dissipating heat generated by repeated charging/discharging of the battery pack while having appropriate absorption/elasticity against external impact and being capable of forming a gap filler having a low weight/specific gravity is needed.

For example, Korean Registered Patent Publication No. 10-2402503 discloses a battery pack structure including a battery module and a gap filler. However, specific physical properties and composition of the gap filler are not disclosed.

### CONTENTS OF THE INVENTION

### [Technical Objective]

An object of the present invention is to provide a gap filler composition providing improved thermal properties, mechanical properties and storage stability.

An objective of the present invention is to provide a battery pack including a gap filler formed of the gap filler composition.

### [Means for Resolving the Objective]

1. A gap filler composition, including: a siloxane-based resin; a filler comprising thermally conductive inorganic particles and graphite particles; a catalyst; and an amino-silicon-based dispersant, wherein a content of the thermally conductive inorganic particles is in a range from 65 wt% to 95 wt% based on a total weight of the composition, and a content of the graphite particles is in a range from 1 wt% to 20 wt% based on a total weight of the composition.
2. The gap filler composition of the above 1, wherein the content of the thermally conductive inorganic particles is in a range from 71 wt% to 89 wt% based on the total weight of the composition.
3. The gap filler composition of the above 1, wherein the content of the graphite particles is in a range from 4 wt% to 16 wt% based on the total weight of the composition.
4. The gap filler composition of the above 1, wherein a content of the filler is greater than 80 wt%, and less than or equal to 95 wt% based on the total weight of the composition.
5. The gap filler composition of the above 1, wherein a content of the amino-silicon-based dispersant is in a range from 0.1 wt% to 3 wt% based on the total weight of the composition.
6. The gap filler composition of the above 1, wherein the thermally conductive inorganic particles include aluminum hydroxide particles.
7. The gap filler composition of the above 6, wherein the aluminum hydroxide particles are particles that are not surface-treated with an alkyl group or an alkylsilane group.
8. The gap filler composition of the above 1, wherein the graphite particles include at least one selected from the group consisting of a flake graphite, an expanded graphite and a spherical graphite.
9. The gap filler composition of the above 8, wherein the spherical graphite has an average particle size of 1 µm to 50 µm.
10. The gap filler composition of the above 1, wherein the siloxane-based resin includes a first siloxane-based resin having an unsaturated end group, and a second siloxane-based resin having a saturated end group.
11. The gap filler composition of the above 10, wherein the siloxane-based resin further includes a cross-linking agent including a siloxane-based resin in which a methyl group is bonded to silicon atoms at both terminal ends.
12. The gap filler composition of the above 1, wherein a specific gravity of the composition is 3 or less.
13. The gap filler composition of the above 1, wherein a viscosity of the composition is 850 Pa·s or less at 25 °C.
14. A battery pack, including: a plurality of battery modules; a support plate; and a gap filler formed between the battery modules and the support plate using the gap filler composition according to the above-described embodiments.

### [Effects of the Invention]

The gap filler composition according to embodiments of the present invention may include thermally conductive inorganic particles as a filler. The thermally conductive inorganic particles may contain aluminum hydroxide particles. In some embodiments, the thermally conductive inorganic particles may satisfy a predetermined content range based on a total weight of the composition. In some embodiments, surface-treated aluminum hydroxide particles may be used.

In example embodiments, the gap filler composition may include graphite particles as a filler. In some embodiments, the graphite particles may satisfy a predetermined content range based on the total weight of the composition.

The specific gravity of the gap filler composition may be reduced by the thermally conductive inorganic particles, and a thermal conductivity may be improved while maintaining a specific gravity reduced by the graphite particles. Accordingly, the gap filler composition may be applied to a vehicle battery pack to implement a weight reduction of a battery pack, and heat generated during charging/discharging processes may be rapidly transferred to an outside.

The thermally conductive inorganic particles and the graphite particles may satisfy a predetermined content range based on the total weight of the composition, thereby achieving storage stability of the gap filler composition.

In example embodiments, the gap filler composition may include an amino-silicon-based dispersant. The amino-silicon-based dispersant may increase dispersibility between the filler and the siloxane-based resin, and may improve storage stability of the composition.

### [Brief Descriptions of the Drawings]

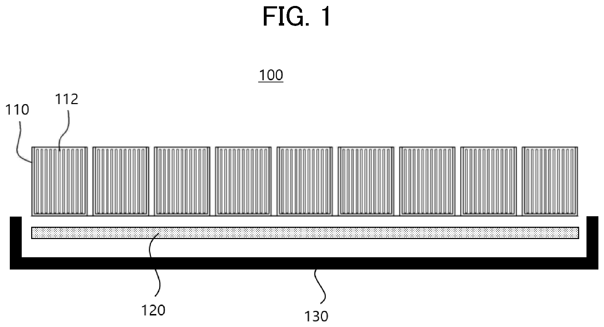

FIG. 1 is a schematic cross-sectional view illustrating a battery pack according to example embodiments.

### [Implementation for Practicing the Invention]

According to embodiments of the present invention, a gap filler composition including a siloxane-based resin, a filler, a catalyst and a dispersant, and having improved thermal and mechanical properties is provided. Further, according to embodiments of the present invention, a battery pack using the gap filler composition is provided.

### <Gap filler composition>

A gap filler composition according to embodiments may include a siloxane-based resin, a filler, a catalyst, and a dispersant.

The siloxane-based resin may be provided as a base component providing curability of the gap filler composition. In example embodiments, the siloxane-based resin may include a first siloxane-based resin and a second siloxane-based resin.

The first siloxane-based resin may be a siloxane-based resin containing a crosslinkable end group. In example embodiments, the first siloxane-based resin may be a siloxane-based resin containing an unsaturated end group (e.g., a vinyl group) at both ends of a molecule.

For example, the first siloxane-based resin may include a compound represented by Chemical Formula 1.

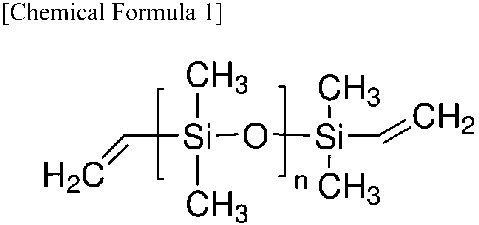

In some embodiments, the first siloxane-based resin may have a viscosity in a range from 50 cps to 150,000 cps, from 70 cps to 1,500 cps, from 100 cps to 1,500 cps, from 200 cps to 1,500 cps, or from 300 cps to 1,200 cps at 25 °C.

In some embodiments, a weight average molecular weight of the first siloxane-based resin may be adjusted in consideration of the viscosity in the above-described range. For example, the first siloxane-based resin may have a weight average molecular weight in a range from 1,500 to 50,000, from 10,000 to 50,000, from 10,000 to 30,000, or from 10,000 to 25,000.

Within the molecular weight and viscosity range, curing properties and curing speed to be described later may be more easily achieved, and appropriate coating properties and flowability of the gap filler composition may be obtained. When the molecular weight and the viscosity exceeds the above range, a viscosity change rate of the gap filler composition over time may be increased, and thus storage stability may be degraded.

In Chemical Formula 1, n may be adjusted in consideration of the viscosity range. For example, n may be a natural number in a range from 40 to 800, from 80 to 800, from 100 to 800, from 130 to 700, or from 150 to 700.

A content of the first siloxane-based resin (e.g., a solid content) may be in a range from 1.5 wt% to 20 wt% based on a total weight of the gap filler composition. In an embodiment, the content of the first siloxane-based resin may be in a range from 5 wt% to 13 wt%, from 7 wt% to 12 wt%, or from 7.5 wt% to 10 wt%. In the above content range, a gap filler having appropriate hardness and elasticity may be effectively formed.

The second siloxane-based resin may be a siloxane-based resin having a structure different from that of the first siloxane-based resin.

The second siloxane-based resin may be included as a chain extending agent or a chain adjusting agent of the gap filler composition, and thus overall viscosity, flowability, cross-linking property, etc., of the composition may be controlled.

In example embodiments, the second siloxane-based resin may be a siloxane-based resin in which a saturated group (e.g., a hydrogen atom) is bonded to silicon atoms at both ends.

The second siloxane-based resin may be included as a chain extending agent or a chain adjusting agent of the gap filler composition, and thus the overall viscosity, flowability, crosslinking property, etc., of the composition may be controlled.

For example, the second siloxane-based resin may include a compound represented by Chemical Formula 2.

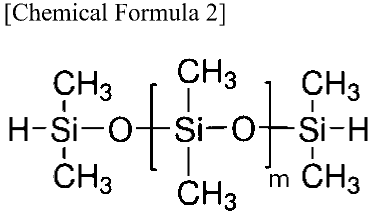

In some embodiments, the second siloxane-based resin may have a viscosity in a range from 10 cps to 1,500 cps, from 100 cps to 1,500 cps, from 200 cps to 1,500 cps, or from 300 cps to 1,200 cps at 25 °C.

A weight average molecular weight of the second siloxane resin may be adjusted according to the viscosity range. For example, the second siloxane-based resin may have a weight average molecular weight in a range from 500 to 50,000, from 10,000 to 50,000, from 10,000 to 30,000, or from 10,000 to 25,000.

Within the molecular weight and viscosity range, curing properties and curing speed to be described later may be more easily achieved, and appropriate coating properties and flowability of the gap filler composition may be achieved. When the molecular weight and the viscosity range exceeds the above range, the viscosity change rate of the gap filler composition over time may be increased, and thus storage stability may be degraded.

In Chemical Formula 2, m may be adjusted in consideration of the molecular weight and viscosity range. For example, m may be a natural number in a range from 10 to 700, from 20 to 700, from 30 to 700, from 50 to 700, from 100 to 700, or from 130 to 700.

A content of the second siloxane-based resin (e.g., a solid content) may be in a range from 0.5 wt% to 10 wt% based on the total weight of the gap filler composition. In an embodiment, the content of the second siloxane resin may be in a range from 2 wt% to 10 wt%, from 2 wt% to 7 wt%, or from 2 wt% to 5 wt%. In the above content range, the gap filler having appropriate hardness and elasticity may be effectively formed.

In example embodiments, a content of the siloxane-based resin based on the total weight (e.g., a solid content) of the gap filler composition may be 10 wt% or more. According to embodiments, the content of the siloxane-based resin may be in a range from 10 wt% to 23 wt%. In an embodiment, the content of the siloxane-based resin may be in a range from 10 wt% to 20 wt%, from 10 wt% to 18 wt%, from 10 wt% to 15 wt%, or from 10 wt% to 14 wt%.

In some embodiments, the gap filler composition may further include a crosslinking agent. The cross-linking agent may be a siloxane-based resin having a relatively low viscosity and having a methyl group bonded to silicon atoms at both ends. For example, the cross-linking agent may include a compound represented by Chemical Formula 3.

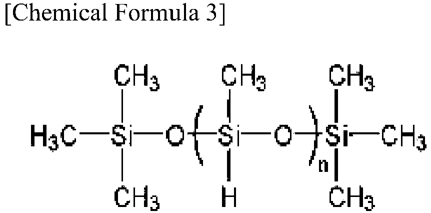

In an embodiment, a viscosity of the cross-linking agent may be smaller than that of the second siloxane-based resin. In an embodiment, the viscosity of the cross-linking agent may be less than 100 cps at 25 °C, and n in Chemical Formula 3 may be adjusted in consideration of the viscosity range.

The cross-linking agent may be included in a cross-linking composition as will be described later. A content of the cross-linking agent based on the total weight of the gap filler composition may be in a range from 0.1 wt% to 0.5 wt%.

The catalyst may be used as a controller for promoting cross-linking and/or interaction of the first siloxane-based resin and/or the second siloxane-based resin of the gap filler composition to obtain curing properties and curing rate as will be described below.

In some embodiments, the catalyst may include a compound or complex of Pt(II), Pt(IV), and/or Pt(0). For example, the catalyst may include platinum chloride, Ashby's catalyst, or Karstedt catalyst.

According to exemplary embodiments, the catalyst may include an organicinorganic hybrid catalyst containing platinum and silicon. In an embodiment, the platinum may be Pt(0) having an oxidation number of 0.

The catalyst may include a Pt atom and a Si₂O group (-Si-O-Si-) in a molecule. For example, silicon (Si) atoms of the Si₂O group may be bonded to a vinyl group, and the Pt atom may be coordinated or captured by the vinyl group.

In example embodiments, a weight ratio of platinum (Pt) to the silicon (Si) atom and an oxygen atom (O) in the catalyst may be in a range from 1.2 to 2.0, from 1.2 to 1.5, or from 1.25 to 1.45.

An appropriate activity of the catalyst through the Pt atom may be maintained by using the catalyst in the weight ratio range. Thus, the curing properties and curing rate of the gap filler composition described below may be easily implemented using the catalyst.

For example, the catalyst may include a unit represented by Chemical Formula 4 below in a molecule thereof.

[Chemical Formula 4] Pt · [(CH₂=CH(CH₃)₂Si)O]

In some embodiments, a content of the catalyst based on a total weight of the composition may be in a range from 0.01 wt% to 0.05 wt%. In the above range, an appropriate curing rate may be implemented while preventing an excessive increase in hardness/elasticity of the gap filler.

The filler may be included as a component that may increase thermal conductivity of the gap filler to improve heat dissipation properties of the battery pack.

The filler may include thermally conductive inorganic particles. Examples of the thermally conductive inorganic particles include aluminum hydroxide (Al(OH)₃)_{,} magnesium hydroxide (Mg(OH)₂)_{,} calcium hydroxide (Ca(OH)₂)_{,} hydromagnesite (Mg₅(CO₃₎₄(OH)₂·4H₂O), magnesia, alumina, AlN (aluminum nitride), boron nitride (BN), silicon nitride, SiC, ZnO, BeO, etc.

In example embodiments, the filler may include aluminum hydroxide (Al(OH)₃) particles. The aluminum hydroxide particles may have a relatively low specific gravity compared to that of alumina particles to lower a total specific gravity of the gap filler composition, and may improve filling properties and flowability.

In some embodiments, the gap filler composition may not include alumina particles. In an embodiment, the thermally conductive inorganic particles may substantially consist of the aluminum hydroxide particles.

In some embodiments, the thermally conductive inorganic particles or the aluminum hydroxide particles may be non-surface-treated particles. For example, the thermally conductive inorganic particles or the aluminum hydroxide particles may be bare particles that are not surface-treated with an alkyl group or an alkylsilane group. Thus, the specific gravity reduction effect due to the use of the aluminum hydroxide particles may be implemented more effectively. For example, the thermally conductive inorganic particles may not be surface-treated with an alkylsilane such as hexyltrimethoxysilane.

The thermally conductive inorganic particles may be included in the largest amount (wt%) of the gap filler composition. Thus, heat conduction properties of the gap filler composition may be sufficiently increased.

In some embodiments, the thermally conductive inorganic particles may be present in an amount from 65 wt% to 95 wt%, from 70 wt% to 89 wt%, from 71 wt% to 87 wt%, or from 71 wt% to 83 wt% based on the total weight of the composition.

The filler may contain graphite particles. The graphite particles may be contained, so that a thermal conductivity may be enhanced while maintaining the reduced specific gravity of the gap filler composition.

Examples of the graphite particles include natural graphite, artificial graphite, activated carbon, carbon black, fullerene, carbon nanotube, graphene oxide, or the like.

In example embodiments, natural graphite may be used as the graphite particles. The natural graphite may include a flake graphite, an expanded graphite, and/or a spherical graphite.

In some embodiments, the spherical graphite may be used as the graphite particles. An average particle diameter of the spherical graphite may be in a range from 0.1 µm to 50 µm, or from 1 µm to 30 µm.

The graphite particles may include the spherical graphite, so that a change ratio in viscosity may be improved while increasing the thermal conductivity of the gap filler composition, and thus storage stability of the gap filler composition may be improved.

In some embodiments, the expanded graphite may be used as the graphite particles.

In some embodiments, the graphite particles may include both the spherical graphite and the expanded graphite.

In an embodiment, a weight ratio of the spherical graphite and the expanded graphite may be in a range from 1:0.1 to 10. The spherical graphite and expanded graphite may be included within the above range and a dispersant to be described below may be included, so that a viscosity change ratio of the gap filler composition may be reduced.

The graphite particles may be present in an amount in a range from 1 wt% to 20 wt% based on the total weight of the composition.

In some embodiments, a content of the graphite particles may be in a range from 1 wt% to 20 wt%, from 2 wt% to 18 wt%, or from 4 wt% to 16 wt% based on the total weight of the composition.

In the above range, thermal properties and viscosity properties may be improved together while maintaining the reduced specific gravity of the gap filler composition. For example, when the content of the graphite particles is less than the above range, the thermal conductivity of the gap filler composition may not be improved. When the content of the graphite particles is greater than the above range, the viscosity change ratio of the gap filler composition may be increased and storage stability may not be achieved.

In some embodiments, the filler may not substantially include silica particles or organic particles. Herein, "substantially not include" may refer to a case in which the content of the total weight of the composition is 0.1 wt% or less. The organic particles may include hollow organic particles such as, e.g., acrylic particles such as poly(methylmethacrylate) (PMMA), epoxy particles, nylon particles, styrene particles, styrene/vinyl copolymer particles, or the like.

The silica particles or the organic particles may not be substantially included, so that improved thermal conductivity properties may be maintained.

In example embodiments, a content of the filler including the thermally conductive inorganic particles and the graphite particles may be maintained as 95 wt% or less of the total weight of the composition.

For example, a content of the thermally conductive inorganic particles may be in a range from 70 wt% to 90 wt%, and a content of the graphite particles may be in a range from 1 wt% to 20 wt% based on the the total weight of the composition, while each content of the thermally conductive inorganic particles and the graphite particles may be adjusted so that the total content of the thermally conductive inorganic particles and the graphite particles may be 95 wt% or less.

In the above content range, measurement of the viscosity and control of a change in viscosity, etc., of the gap filler composition may be implemented, so that storage stability may be achieved.

In some embodiments, the filler may be included in an amount from 75 wt% to 95 wt%, greater than 80 wt% and 95 wt% or less, from 81 wt% to 90 wt%, from 82 wt% to 88 wt%, or from 82% to 87 wt% based on the total weight of the composition.

In the content range, storage stability of the gap filler composition having the low specific gravity and high thermal conductivity may be obtained.

The gap filler composition according to embodiments may further include an amino-silicon-based dispersant.

In some embodiments, the amino-silicon-based dispersant may include an amino-silicon oil including a siloxane unit and an amino group.

For example, the amino-silicon-based dispersant may include a siloxane unit represented by General Formula 1 below, and may include an amino-containing group represented by General Formula 2 below. The amino-containing group may be bonded to a silicon atom.

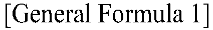

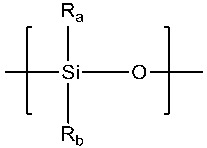

In General Formula 1, Rₐ and R_{b} may each be hydrogen, a C₁-C₅ alkyl group, or a group represented by General Formula 2.

[General formula 2] -ALK₁-NH-ALK₂-NH-R_{c}

In General Formula 1, R_{c} may be hydrogen or a C₁-C₅ alkyl group. ALK₁ and ALK₂ may each independently be a C₁-C₆ alkylene group.

For example, the siloxane unit represented by General Formula 1 may be included as a repeating unit of the amino-silicon-based dispersant. The amino-containing group represented by General Formula 2 may be bonded as Rₐ or R_{b} of at least one siloxane unit among the repeated siloxane units.

In an embodiment, the amino-silicon-based dispersant may include a terminal amine group (-NH₂)_{.} An amine group may be included at a terminal end of the amino-silicon-based dispersant to improve dispersibility of aluminum hydroxide.

The amino-silicon-based dispersant may be included, so that sufficient dispersibility may be achieved even when the non-surface-treated thermally conductive inorganic particles are used. Thus, uniform thermal conductivity may be implemented throughout the gap filler while reducing the specific gravity of the composition.

Additionally, the dispersant containing the siloxane units may be used to stabilize the filler between an interface between the siloxane-based resin and the filler described above. Thus, aggregation of the filler may be prevented, viscosity of the composition may be stably maintained, and flowability may be improved.

In some embodiments, a dispersant containing a hydroxyl group or an epoxy group may not be used as the dispersant. Thus, side reactions caused by the above hydroxyl group or epoxy group between the fillers and the siloxane-based resins may be prevented, and composition dispersibility and heat conduction uniformity may be improved.

In some embodiments, a content of the amino-silicon-based dispersant based on the total weight of the composition may be in a range from 0.1 wt% to 3 wt%. In an embodiment, the content of the amino-silicon-based dispersant may be in a range from 0.1 wt% to 0.5 wt%, or from 0.2 wt% to 0.4 wt%. In the range, dispersibility of the aluminum hydroxide particles may be enhanced, and increase in the specific gravity of the composition may be prevented.

In some embodiments, an amine value defined as an amount of a 0.1 N HCl titer required to neutralize 10 g of the amino-silicon-based dispersant may be in a range from 1 mgKOH/g to 80 mgKOH/g, from 10 mgKOH/g to 60 mgKOH/g, or from 20 mgKOH/g to 50 mgKOH/g. In the above range, the above-described filler stabilization effect may be effectively implemented.

In some embodiments, the gap filler composition may further include an additive for enhancing conductivity and curability of the composition within a range that does not inhibit the action of the siloxane-based resin, the catalyst, and the filler. For example, the additive may include a flame retardant, a surfactant, a silane coupling agent, a colorant (e.g., a pigment), an antioxidant, a plasticizer, or the like. The additive may be included in the composition in a residual amount or an extra amount excluding the siloxane-based resin, the catalyst, and the filler as described above.

Examples of the flame retardant include an organic flame retardant such as melamine cyanurate, an inorganic flame retardant such as magnesium hydroxide, or the like. In an embodiment, a liquid flame retardant material (triethyl phosphate (TEP) or tris (1,3-chloro-2-propyl)phosphate (TCPP), etc.) may be used.

Examples of the surfactant may include polyethylene glycol, polypropylene glycol, oleic acid ethoxylate, alkylphenol ethoxylate, a copolymer of ethylene oxide and propylene oxide, a silicon-based polymer, or the like.

Examples of the above silane coupling agent include γ-glycidoxypropyltrimethoxysilane, γ-glycidoxypropylmethyldiethoxysilane, γ-glycidoxypropyltriethoxysilane, 3-mercaptopropyltrimethoxysilane, vinyltrimethoxysilane, vinyltriethoxysilane, γ-methacryloxypropyltrimethoxysilane, γ-methacryloxypropyltriethoxysilane, γ-aminopropyltrimethoxysilane, γ-aminopropyltriethoxysilane, 3-isocyanatepropyltriethoxysilane, γ-acetoacetatepropyltrimethoxysilane, etc.

A phenol-based compound, a quinone-based compound, an amine-based compound, a phosphorus-based compound, a phosphite-based compound, a thioetherbased compound, or the like, may be used as the antioxidant.

Examples of the plasticizer include tetraethylene glycol monobutyl ether (3,6,9,12-tetraoxahexadecanol), triethylene glycol monobutyl ether (3,6,9-trioxatridecanol), diethylene glycol monobutyl ether (2-(2-butoxyethoxy)ethanol), propylene glycol monobutyl ether, ethylene glycol monobutyl ether, propylene glycol monomethyl ether (1-methoxy-2-propanol), propylene glycol monomethyl ether acetate, polyethylene glycol, glycerin, or the like.

In example embodiments, the gap filler composition may have a specific gravity of 3 or less, or 2.75 or less. In some embodiments, the specific gravity of the gap filler composition may be in a range from 1.8 to 2.7, or from 2.0 to 2.5.

The specific gravity is a value measured as a ratio relative to a density of water at 4 °C under 1 atmosphere.

In the specific gravity, the gap filler having improved mechanical stability and providing desired heat dissipation properties may be obtained without increasing a weight of the battery pack.

In embodiments, the viscosity of the gap filler composition may be 1,000 Pa·s or less, 900 Pa·s or less, or from 200 Pa·s to 850 Pa·s. The viscosity may be a value measured at 25 °C.

The viscosity may refer to a viscosity in a day (within 24 hours) when the gap filler composition is prepared.

Stability of the gap filler composition may be achieved in the viscosity range, and thus long-term storage may be possible.

The gap filler composition may be prepared as a two-component composition. For example, the gap filler composition may be prepared by separately preparing a main composition and a cross-linking composition, and then mixing the main composition and the cross-linking composition.

According to embodiments of the present invention, the first siloxane resin may be commonly included in the main composition and the cross-linking composition.

In example embodiments, the gap filler composition may be prepared as a two-component composition. For example, the gap filler composition may be prepared by separately preparing a main composition and a cross-linking composition, and then mixing the main composition and the cross-linking composition.

The main composition may include the first siloxane-based resin, the thermally conductive inorganic particles, and the catalyst. The cross-linking composition may include the first siloxane-based resin, the second siloxane-based resin, and the filler.

For example, in a state that the catalyst and the first siloxane-based resin are distributed in the main composition, the cross-linking composition including the second siloxane-based resin may be mixed. Thus, the second siloxane-based resin may be introduced in the state where crosslinking points in the main composition are distributed, so that curing efficiency may be improved.

In some embodiments, the first siloxane-based resin may also be included in the cross-linking composition. A weight of the first siloxane-based resin included in the main composition may be greater than a weight of the first siloxane-based resin included in the cross-linking composition.

The thermally conductive inorganic particles may be divided and included in the main composition and the cross-linking composition. In an embodiment, a ratio of an amount of the filler included in the main composition to an amount of the filler included in the cross-linking composition may be in a range from 1.0 to 1.5, or from 1.0 to 1.35. In the above ratio range, heat conduction efficiency may be improved through uniform distribution of the thermally conductive inorganic particles.

The graphite particles may be included in the cross-linking composition. The graphite particles may be divided and included in the main composition and the crosslinking composition.

For example, the cross-linking composition including the second siloxane-based resin and the graphite particles may be mixed with the main composition devoid of the second siloxane-based resin and the graphite particles. Thus, the graphite particles may be introduced in a state that curing efficiency is increased, so that thermal conductivity of the composition may be uniformly improved.

As described above, the amino-silicon-based dispersant may be used to improve dispersibility of the non-surface-treated particles. The amino-silicon-based dispersant may also be divided and included in the main composition and the crosslinking composition.

### <Battery Pack>

FIG. 1 is a schematic cross-sectional view illustrating a battery pack according to example embodiments.

Referring to FIG. 1, a battery pack 100 may include a battery module 110 and a support plate 130, and may include a gap filler 120 formed on the battery module 110 and the support plate 130.

The battery module 110 may include a plurality of battery cells 112. Each of the battery cells 112 may include an electrode assembly including a cathode and an anode alternately and repeatedly stacked. The cathode and the anode may be alternately and repeatedly stacked with a separator interposed therebetween. The cathode may include a lithium metal oxide as a cathode active material, and the battery cell 112 may be provided as a lithium secondary battery.

Each of the plurality of battery cells 112 may include a cathode lead and an anode lead, and the cathode leads and the anode leads may be merged with each other through a busbar to define the battery module 110.

The battery module 110 may be fixed on the support plate 130. The gap filler composition according to embodiments described above may be applied and cured between the battery module 110 and the support plate 130 to form the gap filler 120.

The battery module 110 may be stably fixed on the support plate 130 by the gap filler 120. As described above, the gap filler 120 may have stable curing properties and improved thermal conduction properties.

In example embodiments, the gap filler composition may have a low specific gravity and may maintain a target hardness range within a predetermined time range. Thus, stable hardness properties may be maintained without degrading overall electric vehicle process efficiency or increasing a weight of the battery pack.

Thus, the battery module 110 may have impact resistance and heat resistance for protecting the battery module 110 even under high temperature conditions, and may provide sufficient heat dissipation properties.

The gap filler 120 may be provided as a thermally conductive layer. For example, a thermal conductivity of the gap filler 120 may be greater than or equal to about 2.5 W/m·K. In an embodiment, the thermal conductivity of the gap filler 120 may be in a range from 2.5 W/m·K to 6.0 W/m·K, from 2.75 W/m·K to 5.0 W/m·K, or from 3.0 W/m·K to 5.0 W/m·K.

The thermal conductivity may be measured by a measuring apparatus and method according to an ISO 22007-2 standard.

Heat generated during a charging/discharging process of the battery pack may be quickly transferred to an outside in the above thermal conductivity range, and thus improving thermal stability of the battery pack.

In example embodiments, a height of the gap filler 120 in which the battery module 110 is seated may be in a range from 5.4 mm to 5.8 mm, or from 5.4 mm to 5.7 mm. In the above range, sufficient support stability for the battery module 110 may be provided, and sufficient heat conduction properties may be implemented. Additionally, generation of voids between the battery module 110 and the gap filler 120 due to excessive curing may be prevented.

Hereinafter, experimental examples including examples and comparative examples are presented to enhance the understanding of the present invention, but these are only examples the present invention, and are not intended to limit the scope of the attached claims. It is clear to those skilled in the art that various changes and modifications to examples can be implemented within the scope of the present invention and technical ideas, and that these changes and modifications are within the scope of the attached claims.

### Examples and Comparative Examples

Gap filler compositions were prepared according to components and contents (parts by weight) shown in Table 1 below.

Specifically, a first siloxane-based resin (vinyl-terminated siloxane resin), a catalyst, thermally conductive inorganic particles and an amino-silicon-based dispersant were included in a main composition. The first siloxane-based resin (vinyl-terminated siloxane resin), a second siloxane-based resin (hydrogen-terminated siloxane resin), graphite particles, the thermally conductive inorganic particles and the amino-silicon-based dispersant were included in the cross-linking composition.

The first siloxane-based resin was divided and included in the main composition and the cross-linking composition in a weight ratio of about 2:1. The thermally conductive inorganic particles were divided and included in the main composition and the cross-linking composition in a weight ratio of about 1.2:1 in the main composition. The amino-silicon-based dispersant was divided and included in the main composition and the cross-linking composition in a weight ratio of about 2:1.

A cross-linking agent having a hydrogen-terminated siloxane resin structure was further included in the cross-linking composition.

In Example 10 and Comparative Example 5, alumina particles having an average particle diameter (D50) of 60 µm and surface-treated with an alkylsilane agent (hexyltrimethoxysilane) were included as the thermally conductive inorganic particles.

The main composition and the cross-linking composition were prepared by including the components of Table 1 as described above in a paste mixer, mixing and stirring for 3 minutes at 600 rpm revolution/500 rpm rotation, and then degassing for 10 minutes at 1000 rpm revolution/100 rpm rotation in a vacuum state .

**[Table 1]**

| category | first siloxane based resin (A-1) | second siloxane based resin (B-1) | crosslinking agent (C-1) | dispersant | | thermally conductive inorganic particles (E-1) | graphite particles (F-1) | catalyst (G-1) |
|---|---|---|---|---|---|---|---|---|
| | | | | D-1 | D-2 | | | |
| Example 1 | 8.28 | 4.09 | 0.12 | 0.34 | - | 81.00 | 6.00 | 0.17 |
| Example 2 | 8.28 | 4.09 | 0.12 | 0.34 | - | 71.00 | 16.00 | 0.17 |
| Example 3 | 8.28 | 4.09 | 0.12 | 0.34 | - | 83.00 | 4.00 | 0.17 |
| Example 4 | 8.26 | 4.05 | 0.12 | 0.40 | - | 81.00 | 6.00 | 0.17 |
| Example 5 | 8.32 | 4.09 | 0.12 | 0.30 | - | 81.00 | 6.00 | 0.17 |
| Example 6 | 8.44 | 4.17 | 0.12 | 0.10 | - | 81.00 | 6.00 | 0.17 |
| Example 7 | 13.03 | 6.26 | 0.20 | 0.34 | - | 74.00 | 6.00 | 0.17 |
| Example 8 | 8.51 | 3.86 | 0.12 | 0.34 | - | 67.00 | 20.00 | 0.17 |
| Example 9 | 8.39 | 3.98 | 0.12 | 0.34 | - | 85.00 | 2.00 | 0.17 |
| Example 10 | 8.28 | 4.09 | 0.12 | 0.34 | - | 81.00 (E-2) | 6.00 | 0.17 |
| Example 11 | 6.37 | 3.00 | 0.12 | 0.34 | | 89.00 | 1.00 | 0.17 |
| Example 12 | 3.87 | 2.50 | 0.12 | 0.34 | | 94.00 | 1.00 | 0.17 |
| Example 13 | 7.63 | 3.74 | 0.12 | 0.34 | - | 70.00 | 18.00 | 0.17 |
| Example 14 | 7.63 | 3.74 | 0.12 | 0.34 | - | 82.00 | 6.00 | 0.17 |
| Comparative Example 1 | 7.63 | 3.74 | 0.12 | 0.34 | - | 88.00 | - | 0.17 |
| Comparative example 2 | 8.28 | 4.09 | 0.12 | 0.34 | - | 87.00 | - | 0.17 |
| Comparative Example 3 | 8.28 | 4.09 | 0.12 | - | 0.34 | 81.00 | 6.00 | 0.17 |
| Comparative Example 4 | 8.48 | 4.23 | 0.12 | - | - | 81.00 | 6.00 | 0.17 |
| Comparative Example 5 | 3.00 | 1.37 | 0.12 | 0.34 | - | 95.00 | - | 0.17 |

Specific components shown in Table 1 are as follows.
A-1) first siloxane-based resin
polydimethylsiloxane resin treated with a vinyl group at both ends having a viscosity of 270 cps (see Chemical Formula 1)
B-1) second siloxane-based resin
polydimethylsiloxane resin with both ends hydrogenated having a viscosity of 500 cps (see Chemical Formula 2)
C-1) cross-linking agent
polydimethylsiloxane resin with both ends hydrogenated having a viscosity of 65 cps (see Chemical Formula 3)
D-1) amino-silicon-based dispersant (see General Formulae 1 and 2): amine value 36 mgKOH/g
D-2) silicone-based dispersant containing hydroxyl group (BYK 1799)
E-1) thermally conductive inorganic particles
aluminum hydroxide particles (D50: 5 µm)
E-2) surface treated thermally conductive inorganic particles
alumina particles surface-treated with alkylsilane (hexyltrimethoxysilane) (D50: 60 µm)
F-1) graphite particles
spherical natural graphite (D50: 15 µm)
G-1) catalyst
Pt/Si₂O binding catalyst (Pt/(Si+O) weight ratio: 1.35)

### Experimental Example

### (1) Measurement of specific gravity

A gap filler composition was prepared by mixing the main composition and the cross-linking composition of Examples and Comparative Examples in a mass ratio of 1:1 using a two-component cartridge. The specific gravity of the gap filler composition was measured according to ASTM D792's Test Method A.

Specifically, a weight of each composition and a weight of the composition in water were measured according to the above standard, and then a specific gravity was calculated using the measured weight difference.

### (2) Measurement of thermal conductivity

The main composition and the cross-linking composition of Examples and Comparative Examples were mixed in a mass ratio of 1:1 using a two-component cartridge and cured to form a resin layer.

The thermal conductivity of the resin layer was measured using Hot Disk measuring equipment according to a standard of ISO 22007-2. Specifically, a resin layer having a width/length of 20 mm and a thickness of 6.0 mm was formed, and an average value was calculated after measuring three times.

### (3) Measurement of viscosity

A gap filler composition was prepared by mixing the main composition and cross-linking composition of Examples and Comparative Examples in a mass ratio of 1:1 using a two-component cartridge. A viscosity of the gap filler composition over time was measured using an Advanced Rheometric Expansion System (Brookfield, DV2T Rheometer). (Measurement conditions: 20 rpm / 25°C, Gap 5mm).

The evaluation results are shown in Table 2 below.

**[Table 2]**

| category | specific gravity | thermal conductivity (W/m·K) | viscosity (Pa·s) | | | | |
|---|---|---|---|---|---|---|---|
| | | | preparation day | after 1 day | after 2 days | after 3 days | after 4 days |
| Example 1 | 2.00 | 3.20 | 359 | 369 | 374 | 374 | 372 |
| Example 2 | 2.00 | 4.30 | 830 | 841 | 852 | 851 | 850 |
| Example 3 | 2.00 | 3.00 | 342 | 362 | 371 | 368 | 378 |
| Example 4 | 2.00 | 3.20 | 331 | 345 | 355 | 356 | 353 |
| Example 5 | 2.00 | 3.20 | 546 | 568 | 581 | 584 | 579 |
| Example 6 | 2.00 | 3.15 | 621 | 659 | 799 | 951 | 1250 |
| Example 7 | 1.80 | 1.90 | 212 | 248 | 252 | 250 | 252 |
| Example 8 | 2.00 | 4.50 | 1043 | 1090 | 1132 | 1158 | 1233 |
| Example 9 | 2.00 | 2.45 | 340 | 358 | 362 | 368 | 375 |
| Example 10 | 2.70 | 3.20 | 342 | 348 | 356 | 371 | 380 |
| Example 11 | 2.10 | 3.00 | 819 | 865 | 925 | 1065 | 1385 |
| Example 12 | 2.20 | 3.10 | 1023 | 1098 | 1253 | 1303 | 1348 |
| Example 13 | 2.00 | 4.50 | 946 | 992 | 1034 | 1088 | 1178 |
| Example 14 | 2.05 | 3.25 | 651 | 679 | 701 | 734 | 795 |
| Comparative Example 1 | 2.00 | 2.40 | 332 | 349 | 362 | 380 | 408 |
| Comparative Example 2 | 2.00 | 2.40 | 313 | 325 | 329 | 328 | 330 |
| Comparative Example 3 | 2.00 | 3.20 | 976 | 956 | 1540 | 1995 | 1956 |
| Comparative Example 4 | 2.00 | 3.20 | 946 | 1285 | 1568 | 1898 | 2034 |
| Comparative Example 5 | 2.30 | 2.60 | 1059 | 1162 | 1204 | 1243 | 1367 |

Referring to Tables 1 and 2, in Examples including the thermally conductive inorganic particles, the graphite particles and the amino-silicon-based dispersant, viscosity stability over time was provided while maintaining a low specific gravity of 3 or less, or in a range from 2.20 to 1.5; and a thermal conductivity of 2.50 W/m·K or more, or in a range from 3.0 W/m·K to 4.50 W/m·K.

In Example 6 where the amount of the amino-silicon-based dispersant was relatively low, a viscosity change of the composition over time was high, and the viscosity stability of the composition was slightly lowered compared to those from other Examples.

In Example 7 where the content of the inorganic filler including the thermally conductive inorganic particles and the graphite particles was relatively low, the thermal conductivity was relatively lower than those in other Examples.

In Example 8 where the content of the graphite particles was relatively high, the viscosity of the composition was higher than those in other Examples. In Example 9 where the graphite content was relatively low, the composition provided slightly lower thermal conductivity even though the content of the inorganic filler including the thermally conductive inorganic particles and the graphite particles was the same as that in Example 1.

In Example 10 where the surface-treated alumina particles were used, the specific gravity of the composition was slightly increased compared to those from other Examples.

In Examples 11 and 12 where the content of the thermally conductive inorganic particles was relatively high, the viscosity of the composition was relatively higher than those of other Examples.

In Examples 8 and 13 where the content of the graphite particles was relatively high, the composition provided relatively high thermal conductivity compared to those from other Examples, but the viscosity was increased and the storage stability was slightly degraded.

In Comparative Examples 1, 2 and 5 devoid of the graphite particles, the thermal conductivity of the composition was significantly lowered.

In Comparative Example 3 where the hydroxyl-silicon-based dispersant was used instead of the amino-silicon-based dispersant and Comparative Example 4 where the amino-silicon-based dispersant was not used, flowability and viscosity stability of the compositions were significantly degraded due to side reactions with surfaces of the thermally conductive inorganic particles.

In Comparative Example 5 where the graphite particles were not included and only a large amount of the thermally conductive inorganic particles were included, the thermal conductivity was degraded even though the content of the thermally conductive inorganic particles and the inorganic filler including the graphite particles was the same as that in Example 12.

## Claims

1. A gap filler composition, comprising:
a siloxane-based resin;
a filler comprising thermally conductive inorganic particles and graphite particles;
a catalyst; and
an amino-silicon-based dispersant,
wherein a content of the thermally conductive inorganic particles is in a range from 65 wt% to 95 wt% based on a total weight of the composition, and
a content of the graphite particles is in a range from 1 wt% to 20 wt% based on a total weight of the composition.

2. The gap filler composition of claim 1, wherein the content of the thermally conductive inorganic particles is in a range from 71 wt% to 89 wt% based on the total weight of the composition.

3. The gap filler composition of claim 1, wherein the content of the graphite particles is in a range from 4 wt% to 16 wt% based on the total weight of the composition.

4. The gap filler composition of claim 1, wherein a content of the filler is greater than 80 wt%, and less than or equal to 95 wt% based on the total weight of the composition.

5. The gap filler composition of claim 1, wherein a content of the amino-silicon-based dispersant is in a range from 0.1 wt% to 3 wt% based on the total weight of the composition.

6. The gap filler composition of claim 1, wherein the thermally conductive inorganic particles comprise aluminum hydroxide particles.

7. The gap filler composition of claim 6, wherein the aluminum hydroxide particles are particles that are not surface-treated with an alkyl group or an alkylsilane group.

8. The gap filler composition of claim 1, wherein the graphite particles comprise at least one selected from the group consisting of a flake graphite, an expanded graphite and a spherical graphite.

9. The gap filler composition of claim 8, wherein the spherical graphite has an average particle size of 1 µm to 50 µm.

10. The gap filler composition of claim 1, wherein the siloxane-based resin comprises a first siloxane-based resin having an unsaturated end group, and a second siloxane-based resin having a saturated end group.

11. The gap filler composition of claim 10, wherein the siloxane-based resin further comprises a cross-linking agent including a siloxane-based resin in which a methyl group is bonded to silicon atoms at both terminal ends.

12. The gap filler composition of claim 1, wherein a specific gravity of the composition is 3 or less.

13. The gap filler composition of claim 1, wherein a viscosity of the composition is 850 Pa·s or less at 25 °C.

14. A battery pack, comprising:
a plurality of battery modules;
a support plate; and
a gap filler formed between the battery modules and the support plate using the gap filler composition of claim 1.
